# FASCICULE DE BREVET EUROPEEN

(11) **EP 2 714 588 B1**
(45) Date de publication et mention de la délivrance du brevet: **04.09.2019**
(21) Numéro de dépôt: 12718707.8
(22) Date de dépôt: 06.04.2012
(51) Int. Cl.: C01B 21/093, H01M 10/0525, C01B 21/086, H01M 2/36, H01M 10/0568, H01M 10/052, H01M 10/054

(54) **PROCEDE DE PREPARATION DE BIS(FLUOROSULFONYL)IMIDURE DE LITHIUM OU SODIUM**
VERFAHREN ZUR HERSTELLUNG VON LITHIUM- ODER NATRIUMBIS(FLUORSULFONYL)IMID
METHOD FOR PRODUCING LITHIUM OR SODIUM BIS(FLUOROSULFONYL)IMIDE

(30) Priorité: 24.05.2011 FR 1154490; 23.03.2012 FR 1252642
(43) Date de publication de la demande: 09.04.2014
(73) Titulaire: Arkema France, 92700 Colombes (FR)
(72) Inventeur: SCHMIDT, Grégory, 92705 Colombes Cedex (FR)
(74) Mandataire: Chahine, Audrey Claire
(86) Numéro de dépôt international: PCT/FR2012/050763
(87) Numéro de publication internationale: WO 2012/160280

(56) Documents cités:
- EP-A1- 0 050 290
- WO-A1-95/26056
- WO-A1-2009/123328
- CA-A1- 2 527 802
- PARENT Y: "Réactivité chimique de l'ion N(SO3)23- : hydrolyse selon la température et l'acidité. Décomposition thermique des imidodisulfates anhydres alcalins", BULLETIN DE LA SOCIETE CHIMIQUE DE FRANCE, SOCIETE FRANCAISE DE CHIMIE. PARIS, FRANCE, no. 1-2, Part 1, 1 janvier 1984 (1984-01-01), pages I-60, XP008146453, ISSN: 0037-8968
- FARRUGIA L J ET AL: "Preparation and X-ray crystal structure of caesium imidodisulphuryl fluoride Cs[N (SO2F)2]", JOURNAL OF FLUORINE CHEMISTRY, ELSEVIER, NL, vol. 78, no. 1, 1 mai 1996 (1996-05-01), pages 51-53, XP004020399, ISSN: 0022-1139, DOI: 10.1016/0022-1139(96)03413-6
- MARTIN BERAN ET AL: "A New Method of the Preparation of Imido-bis(sulfuric acid) Dihalogenide, (F, Cl), and the Potassium Salt of Imido-bis(sulfuric acid) Difluoride", ZEITSCHRIFT FÜR ANORGANISCHE UND ALLGEMEINE CHEMIE, vol. 631, no. 1, 1 janvier 2005 (2005-01-01), pages 55-59, XP055014688, ISSN: 0044-2313, DOI: 10.1002/zaac.200400325
- PARENT Y: "Synthèses, stabilité thermique, spectroscopie Raman des imidodisulfates bi et trimétalliques de lithium et de césium. Comparaison avec les autres dérivés alcalins", BULLETIN DE LA SOCIETE CHIMIQUE DE FRANCE, SOCIETE FRANCAISE DE CHIMIE. PARIS, FRANCE, no. 7-8, 1 janvier 1982 (1982-01-01), pages I-284, XP008146569, ISSN: 0037-8968
- LIFEI LI ET AL: "Transport and Electrochemical Properties and Spectral Features of Non-Aqueous Electrolytes Containing LiFSI in Linear Carbonate Solvents", JOURNAL OF THE ELECTROCHEMICAL SOCIETY, vol. 158, no. 2, 1 janvier 2011 (2011-01-01), pages A74-A82, XP055014628, ISSN: 0013-4651, DOI: 10.1149/1.3514705 cité dans la demande
- BERAN ET AL: "A new route to the syntheses of alkali metal bis(fluorosulfuryl)imides: Crystal structure of LiN(SO2F)2", POLYHEDRON, PERGAMON PRESS, OXFORD, GB, vol. 25, no. 6, 17 avril 2006 (2006-04-17) , pages 1292-1298, XP005343187, ISSN: 0277-5387, DOI: 10.1016/J.POLY.2005.09.017
- RUFF J K ET AL: "IMIDODISULFURYL FLUORIDE, CESIUM IMIDODISULFURYL FLUORIDE, AND FLUOROIMIDODISULFURYL FLUORIDE", INORGANIC SYNTHESES, 1968, pages 138-143, XP000926426,

## Description

### DOMAINE DE L'INVENTION

La présente invention concerne un procédé de préparation de sel de bis(fluorosulfonyl)imidure de lithium ou sodium, ainsi qu'un procédé de préparation de produits intermédiaires utiles pour la préparation du bis(fluorosulfonyl)imidure de lithium ou sodium. Le bis(fluorosulfonyl)imidure de lithium ou sodium ainsi obtenu peut être utilisé pour la fabrication d'électrolytes et de batteries de type lithium-ion ou sodium-ion.

### ARRIERE-PLAN TECHNIQUE

Une batterie lithium-ion ou sodium-ion comprend au moins une électrode négative, une électrode positive, un séparateur et un électrolyte. L'électrolyte est constitué d'un sel de lithium ou sodium dissous dans un solvant qui est généralement un mélange de carbonates organiques, afin d'avoir un bon compromis entre la viscosité et la constante diélectrique.

Parmi les sels les plus utilisés figure l'hexafluorophosphate de lithium (LiPF6), qui possède beaucoup des nombreuses qualités requises mais présente le désavantage de se dégrader sous forme de gaz d'acide fluorhydrique. Cela pose des problèmes de sécurité, notamment dans le contexte de l'utilisation prochaine des batteries lithium-ion pour les véhicules particuliers.

D'autres sels ont donc été développés, tels que le LiTFSI (bis(trifluoromethanesulfonyl)imidure de lithium) et le LiFSI (bis(fluorosulfonyl)imidure de lithium). Ces sels présentent peu ou pas de décomposition spontanée, et sont plus stables vis-à-vis de l'hydrolyse que le LiPF6. Néanmoins le LiTFSI présente le désavantage d'être corrosif vis-à-vis des collecteurs de courant en aluminium, ce qui n'est pas le cas du LiFSI. Le LiFSI semble donc une alternative prometteuse au LiPF6.

Il existe plusieurs voies de synthèse connues pour la fabrication de bis(fluorosulfonyl)imidure de lithium. L'une de ces voies consiste en la réaction de l'acide perfluorosulfonique avec de l'urée : voir le document WO 2010/113483 à cet égard. Les produits de cette réaction sont ensuite dissous dans l'eau et le bis(fluorosulfonyl)imide est précipité sous forme de sel avec du tétrabutylammonium. Mais cette voie de synthèse n'est pas viable à grande échelle car le rendement global est très faible.

Une autre voie consiste à faire réagir du difluorosulfoxyde avec de l'ammoniaque : voir le document WO 2010/113835 à cet égard. Mais cette méthode forme également de nombreux produits secondaires, ce qui nécessite des étapes de purification coûteuses.

Par ailleurs, le document WO 2009/123328 décrit de manière générale la fabrication de composés sulfonylimides. Le document décrit notamment la réaction entre l'acide amidosulfurique et le chlorure de thionyle, puis avec l'acide chlorosulfonique, pour former le bis(chlorosulfonyl)imide, qui est ensuite soumis à une étape de fluoration. Or le bis(chlorosulfonyl)imide est un composé instable, ne tolérant pas la purification. De ce fait, les impuretés présentes sont conservées jusqu'à l'issue de l'étape de fluoration et rendent la séparation plus difficile.

Le document BULLETIN DE LA SOCIÉTÉ CHIMIQUE DE FRANCE, 1984, no. 1-2, Part 1, pages I-60 à I-64 propose une autre méthode de préparation des imidodisulfates tripotassiques et trisodiques. On prépare des imidodisulfates bimétalliques par chauffage des amidosulfates correspondants puis on les salifie en solution aqueuse. On obtient par précipitation à l'éthanol des sels hydratés, à partir desquels on prépare les sels de lithium et de césium.

Par conséquent, il existe un réel besoin de mettre au point un procédé permettant d'obtenir du LiFSI ou NaFSI de manière plus simple et / ou avec un meilleur rendement.

### RESUME DE L'INVENTION

L'invention concerne en premier lieu un procédé de préparation d'un sel de bis(sulfonate)imidure de formule :

(III) (SO₃⁻)-N⁻-(SO₃⁻),3C⁺

où C⁺ représente un cation monovalent, comprenant la réaction de l'acide amidosulfurique de formule :

(I) (OH)-SO₂-NH₂

avec un acide halogénosulfonique de formule :

(II) (OH)-SO₂-X

où X représente un atome d'halogène, et comprenant une réaction avec une base qui est un sel formé avec le cation C⁺.

Selon un mode de réalisation, X représente un atome de chlore.

Selon un mode de réalisation, C⁺ représente l'ion potassium K⁺, sodium Na+, lithium Li+ ou césium Cs⁺, de préférence l'ion Na+ et l'ion potassium K⁺.

Selon un mode de réalisation, le procédé comprend la réaction de l'acide amidosulfurique de formule (I) avec l'acide halogénosulfonique de formule (II), en présence d'une base non nucléophile comprenant le cation C⁺, ladite base non nucléophile étant de préférence le carbonate de potassium K₂CO₃ ou le carbonate de sodium Na₂CO₃.

Selon un mode de réalisation alternatif, le procédé comprend la réaction de l'acide amidosulfurique de formule (I) avec l'acide halogénosulfonique de formule (II), en présence d'une première base pour fournir le bis(sulfonyl)imide de formule (IV) :

(IV) (OH)-SO₂-NH-SO₂-(OH)

puis la réaction du bis(sulfonyl)imide de formule (IV) avec une deuxième base qui est un sel formé avec le cation C⁺, pour obtenir le sel de bis(sulfonate)imidure de formule (III).

Selon un mode de réalisation, la première base est la triéthylamine, et la deuxième base est choisie parmi l'hydroxyde de potassium, l'hydroxyde de sodium et le carbonate de potassium.

Selon un mode de réalisation, le procédé comprend une étape de purification du sel de bis(sulfonate)imidure de formule (III), de préférence par recristallisation dans l'eau ou dans un solvant polaire tel qu'un alcool.

L'invention a également pour objet un procédé de préparation d'acide bis(fluorosulfonyl)imide de formule :

(V) F-(SO₂)-NH-(SO₂)-F

comprenant la préparation d'un sel de bis(sulfonate)imidure de formule (III) ainsi que décrit ci-dessus, suivie de la fluoration dudit sel de bis(sulfonate)imidure.

Selon un mode de réalisation, la fluoration du sel de bis(sulfonate)imidure comprend la réaction du sel de bis(sulfonate)imidure avec un agent fluorant, de préférence choisi parmi le fluorure d'hydrogène, le trifluorure de soufre diéthylamine et le tétrafluorure de soufre.

Selon un mode de réalisation alternatif, la fluoration du sel de bis(sulfonate)imidure comprend : (a) la chloration du sel de bis(sulfonate)imidure au moyen d'un agent chlorant, de préférence choisi parmi le chlorure de thionyle, le pentachlorure de phosphore, l'oxychlorure de phosphore et le chlorure d'oxalyle, pour obtenir un sel de bis(chlorosulfonyl)imidure de formule :

(VI) Cl-(SO₂)-N⁻-(SO₂)-Cl,C⁺

puis (b) la fluoration du sel de bis(chlorosulfonyl)imidure de formule (VI) au moyen d'un agent fluorant pour obtenir l'acide bis(fluorosulfonyl)imide de formule (V), l'agent fluorant étant de préférence choisi parmi le fluorure d'hydrogène, le trifluorure de soufre diéthylamine, le tétrafluorure de soufre et les sels fluorés, notamment le fluorure de zinc.

L'invention a également pour objet un procédé de préparation de sel de bis(fluorosulfonyl)imidure de lithium ou de sodium de formule :

(VII) F-(SO₂)-N⁻-(SO₂)-F, M⁺

avec M représentant Li ou Na, comprenant la préparation d'acide bis(fluorosulfonyl)imide de formule (V) ainsi que décrit ci-dessus, puis la réaction de cet acide bis(fluorosulfonyl)imide avec une base lithiée ou sodée.

L'invention a tout particulièrement pour objet un procédé de préparation de sel de bis(fluorosulfonyl)imidure de lithium de formule (VII).

Selon un mode de réalisation, la base lithiée ou sodée est choisie parmi l'hydroxyde de lithium ou sodium ou le carbonate de lithium ou sodium.

L'invention a également pour objet un procédé de fabrication d'un électrolyte, comprenant la préparation de sel de bis(fluorosulfonyl)imidure de formule (VII) ainsi que décrit ci-dessus, et la dissolution du sel de bis(fluorosulfonyl)imidure dans un solvant.

L'invention a également pour objet un procédé de fabrication d'une batterie ou d'une cellule de batterie, comprenant la fabrication d'un électrolyte ainsi que décrit ci-dessus et l'insertion de cet électrolyte entre une anode et une cathode.

La présente invention permet de surmonter les inconvénients de l'état de la technique. Elle fournit plus particulièrement un procédé permettant d'obtenir du LiFSI ou NaFSI de manière plus simple et / ou avec un meilleur rendement.

Ceci est accompli grâce à la mise au point d'un procédé de préparation d'un trisel de bis(sulfonate)imidure et d'un cation, comprenant la réaction de l'acide amidosulfurique avec un acide halogénosulfonique avec l'ajout d'au moins une base qui est un sel comprenant le cation susmentionné.

Ce trisel de bis(sulfonate)imidure peut ensuite servir à préparer du bis(fluorosulfonyl)imide, qui permet à son tour d'obtenir le LiFSI ou NaSI, et ce avec un meilleur rendement que dans les voies de synthèse proposées dans l'état de la technique.

Par rapport au document WO 2009/123328, le procédé selon la présente invention comprend l'isolation du sel bis(chlorosulfonyl)imide (VI) permettant ainsi d'éliminer des impuretés, telle que du chlorosulfonique résiduel, formées lors de la première étape.

### DESCRIPTION DE MODES DE REALISATION DE L'INVENTION

L'invention est maintenant décrite plus en détail et de façon non limitative dans la description qui suit.

L'invention prévoit de préparer le sel de bis(fluorosulfonyl)imidure de lithium selon le schéma général suivant en trois parties:
1) (OH)-SO₂-NH₂ + (OH)-SO₂-X → (SO₃⁻)-N⁻-(SO₃⁻),3C⁺
2) (SO₃⁻)-N⁻-(SO₃⁻),3C⁺ → F-(SO₂)-NH-(SO₂)-F
3) F-(SO₂)-NH-(SO₂)-F → F-(SO₂)-N⁻-(SO₂)-F,M⁺

### 1^{ère} partie - préparation du trisel de bis(sulfonate)imidure

Deux variantes sont envisagées pour cette première partie. La première variante répond au schéma réactionnel suivant :

(OH)-SO₂-NH₂ + (OH)-SO₂-X + z CₓB_{y} → (SO₃⁻)-N⁻-(SO₃⁻),3C⁺ + z' B_{y'}H_{x'} + CX

Dans ce schéma précédent, (OH)-SO₂-NH₂ est l'acide amidosulfurique, dont la formule est notée (I) ; (OH)-SO₂-X est un acide halogénosulfonique (X représentant un atome d'halogène), dont la formule est notée (II) ; et CₓB_{y} est une base non nucléophile (c'est-à-dire une base organique qui n'est pas susceptible d'interférer avec la réaction, en venant s'additionner de façon permanente sur (OH)-SO₂-X), C⁺ représentant le cation, monovalent, issu de cette base. x, y, z, x', y' et z' sont des nombres entiers ou fractionnaires, tels que le produit zx et le produit z'x' sont égaux à 4.

La formule du trisel (SO₃⁻)-N⁻-(SO₃⁻),3C⁺ est notée (III).

De préférence, X représente le chlore.

C⁺ représente par exemple l'ion potassium K⁺. CₓB_{y} représente par exemple le carbonate de potassium K₂CO₃. Dans ce cas C représente le potassium K, B représente CO₃, x vaut 2, y vaut 1, z vaut 2, x' vaut 2, y' vaut 1 et z' vaut 2.

Alternativement, C⁺ peut représenter par exemple l'ion sodium Na⁺, l'ion césium Cs⁺ ou l'ion lithium Li⁺.

La réaction ci-dessus peut être par exemple effectuée à une température de 0 à 150°C (de préférence de 0 à 50°C, de manière plus particulièrement préférée de 10 à 40°C et notamment de 15 à 30°C), et à une pression allant de la pression atmosphérique jusqu'à 15 bars. L'acide sulfamique est de préférence le réactif limitant et l'acide halogénosulfonique (OH)-SO₂-X peut être utilisé en excès (1 à 3 équivalent).

La deuxième variante répond au schéma réactionnel suivant :

(OH)-SO₂-NH₂ + (OH)-SO₂-X + B' → (OH)-SO₂-NH-SO₂-(OH) + B'H⁺,X⁻

(OH)-SO₂-NH-SO₂-(OH) + z CₓB_{y} → (SO₃⁻)-N⁻-(SO₃⁻),3C⁺ + z' B_{y'}H_{x'}

Dans ce schéma, (OH)-SO₂-NH-SO₂-(OH) est le bis(sulfonyl)imide, dont la formule est notée (IV) ; X représente encore un atome d'halogène ; B' est une base nucléophile ou non ; CₓB_{y} est une base nucléophile ou non, C⁺ représentant le cation, monovalent, issu de cette base. x, y, z, x', y' et z' sont des nombres entiers ou fractionnaires, tels que le produit zx et le produit z'x' sont égaux à 3. Dans le schéma réactionnel ci-dessus, les deux étapes sont des étapes successives, et le bis(sulfonyl)imide de formule (IV) n'est pas isolé.

De préférence, X représente le chlore.

C⁺ représente par exemple l'ion potassium K⁺.

CₓB_{y} représente par exemple l'hydroxyde de potassium (KOH). L'hydroxyde de sodium (NaOH) ou le carbonate de potassium (K₂CO₃).

B' représente par exemple la triéthylamine (NEt₃).

Le schéma réactionnel ci-dessus peut être par exemple mis en oeuvre à une température de 0 à 150°C (de préférence de 0 à 50°C, de manière plus particulièrement préférée de 10 à 40°C et notamment de 15 à 30°C) et à une pression allant de la pression atmosphérique à 15 bars. L'acide sulfamique est de préférence le réactif limitant et l'acide halogénosulfonique (OH)-SO₂-X peut être utilisé en excès (1 à 3 équivalent). La base B' est également utilisée comme solvant de réaction, et la base CₓB_{y} est ajoutée en excès jusqu'à l'obtention d'un pH basique de 8 à 14.

A l'issue de cette première partie, le composé (trisel ou acide) de formule (III) est de préférence purifié. En effet, le trisel (III) ou acide est peu soluble dans l'eau alors que les impuretés formées lors de la réaction sont très soluble dans l'eau dans des conditions basiques. La purification peut également se faire dans d'autres solvants polaires tels que les alcools.

### 2^{ème} partie - préparation de l'acide bis(fluorosulfonyl)imide

Deux variantes sont envisagées pour cette deuxième partie. La première variante comprend une chloration puis une fluoration, alors que la deuxième variante comprend une fluoration directe.

La première variante répond au schéma réactionnel suivant :

(SO₃⁻)-N⁻-(SO₃⁻),3C⁺ + x A₁ → Cl-(SO₂)-N⁻-(SO₂)-Cl,C⁺ + A₂

Cl-(SO₂)-N⁻-(SO₂)-Cl,C⁺ + 3 HF → F-(SO₂)-NH-(SO₂)-F + 2 HCI + CF

Dans ce schéma, F-(SO₂)-NH-(SO₂)-F est l'acide bis(fluorosulfonyl)imide, dont la formule est notée (V) ; A₁ représente un agent chlorant ; A₂ représente de manière générique un ou plusieurs produits de la réaction de chloration ; C⁺ représente toujours le cation monovalent décrit ci-dessus ; x est un nombre entier ou fractionnaire ; Cl-(SO₂)-N⁻-(SO₂)-Cl,C⁺ est un sel de bis(chlorosulfonyl)imidure, dont la formule est notée (VI).

A₁ peut par exemple être le chlorure de thionyle SOCl₂ (x=1), auquel cas A₂ représente 2 KCl + 2 SO₂, si C+ est l'ion potassium.

A₁ peut également être le pentachlorure de phosphore (PCl₅), l'oxychlorure de phosphore (POCl₃) ou le chlorure d'oxalyle.

La réaction de chloration peut être par exemple effectuée à une température de 0 à 150°C et à une pression allant de la pression atmosphérique jusqu'à 15 bars. L'agent chlorant est de préférence utilisé en excès et fait généralement office de solvant. La température de la réaction est avantageusement voisine de la température d'ébullition du solvant. Par exemple, dans le cas du chlorure de thionyle, la température d'ébullition est voisine de 76°C, et la température de la réaction sera donc par exemple de 60 à 90°C, ou de 70 à 80 °C.

En ce qui concerne la réaction de fluoration à proprement parler, celle-ci peut être par exemple effectuée à une température de 0 à 350°C (de préférence de 0 à 50°C, de manière plus particulièrement préférée de 10 à 40°C et notamment de 15 à 30°C) et à une pression allant de la pression atmosphérique à 15 bars.

Il est également possible d'utiliser d'autres agents de fluoration à la place de HF, tels que le trifluorure de soufre diéthylamine (DAST) ou le tétrafluorure de soufre (SF₄), ou bien encore des sels fluorés de formule CₓF_{y} où x et y sont des entiers positifs et C un cation. Par exemple CₓF_{y} peut être le fluorure de zinc ZnF₂, comme décrit dans le document WO 2009/123328.

La deuxième variante répond par exemple au schéma réactionnel suivant :

(SO₃⁻)-N⁻-(SO₃⁻),3C⁺ + 5 HF → F-(SO₂)-NH-(SO₂)-F + 2 H₂O + 3 CF

Dans ce schéma, C⁺ représente toujours le cation monovalent décrit ci-dessus, par exemple K⁺.

La réaction peut être par exemple effectuée à une température de 0 à 350°C (de préférence de 0 à 50°C, de manière plus particulièrement préférée de 10 à 40°C et notamment de 15 à 30°C) et à une pression allant de la pression atmosphérique jusqu'à 15 bars. Le fluorure d'hydrogène est généralement utilisé en excès. La réaction est effectuée sans solvant.

A la place du fluorure d'hydrogène, il est possible d'utiliser d'autres agents de fluoration, tels que le trifluorure de soufre diéthylamine (DAST) ou le tétrafluorure de soufre (SF₄).

De tels agents de fluoration étant plus réactifs que le fluorure d'hydrogène, ils peuvent être utilisés en moindre excès que le fluorure d'hydrogène, dans les mêmes gammes de pression et de température.

L'acide bis(fluorosulfonyl)imide est ensuite purifié ; en fin de réaction l'acide est extrait du solide résiduel à l'aide d'un solvant organique, car les impuretés ne sont pas ou peu solubles dans les solvants organiques. Ce solvant organique est de préférence le diméthylcarbonate.

### 3^{ème} partie - préparation du MFSI

Cette troisième partie répond au schéma réactionnel suivant :

F-(SO₂)-NH-(SO₂)-F + MB → F-(SO₂)-N⁻-(SO₂)-F,M⁺ + BH

F-(SO₂)-N⁻-(SO₂)-F,M⁺ est le LiFSI ou NaFSI, dont la formule est notée (VII). MB est une base lithiée ou sodée, c'est-à-dire une base sous forme de sel formé à partir du cation lithium Li⁺ ou Na⁺ et d'un anion B⁻. Cette base peut être par exemple l'hydroxyde de lithium ou de sodium ou le carbonate de lithium ou de sodium.

La réaction peut être par exemple effectuée à une température de 25 à 80°C. La base lithiée ou sodée est utilisée dans une proportion de 1 à 1,5 équivalents, de préférence dans l'eau, ou encore dans un solvant polaire tel qu'un alcool.

Selon la présente invention, la pureté du bis(fluorosulfonyl)imidure de lithium ou de sodium (MFSI) est de préférence au moins égale à 99,5 % en poids, avantageusement au moins égale à 99,9 % en poids.

Les impuretés, telles que LiCl, LiF et FSO₃Li ou NaCl, NaF et FSO₃Na, présentes dans le sel de bis(sulfonate)imidure representent chacun, de préférence au plus 1000 ppm, avantageusement au plus 500 ppm.

Quelque soit le mode de réalisation, le FSO₃Li représente, de préférence, au plus 5 ppm.

Quelque soit le mode de réalisation selon la présente invention, le bis(fluorosulfonyl) imidure de lithium ou de sodium est de préférence exempt d'eau et d'impuretés constituées de sels formés d'un cation issu du groupe 11 à 15 et période 4 à 6 du Tableau Périodique (exemples Zu,Cu,Sn,Pb,Bi).

Ces impuretés sont néfastes aux performances de la batterie Li-ion ou Na-ion de part leur activité électrochimique.

### Préparation d'un électrolyte

Le MFSI préparé comme décrit ci-dessus peut être utilisé pour la préparation d'un électrolyte, en le dissolvant dans un solvant approprié.

Par exemple, ainsi que cela est décrit dans le document J. Electrochemical Society, 2011, 158, A74-82, le LiFSI peut être dissous à une concentration de 1 mol/L dans un mélange d'éthylenecarbonate (EC), de diméthylcarbonate (DMC) et d'éthylméthylcarbonate (EMC) à 5 pour 2 pour 3 en volume ; un tel électrolyte présente montre une très bonne conductivité, une bonne stabilité en cyclage et une corrosion de l'aluminium au-dessus de 4,2 V.

Cet électrolyte peut ensuite être utilisé pour la fabrication de batteries ou de cellules de batterie, en le disposant entre une cathode et une anode, de manière connue en soi.

### EXEMPLES

Les exemples suivants illustrent l'invention sans la limiter.

### Exemple 1 - synthèse du trisel de bis(sulfonate)imidure de potassium

La réaction est réalisée sans solvant dans un ballon en verre sec. Sous agitation, 1,1 mL d'acide chlorosulfonique est additionné sur 1,61 g d'acide sulfamique. Ensuite, 2 mL de triéthylamine sont ajoutés. La réaction est laissée sous agitation pendant 1 journée. La réaction est arrêtée par l'addition de 20 mL d'eau. Ensuite on ajoute 2,79 g d'hydroxyde de potassium. Le produit final précipite et est récupéré par filtration et lavé avec 2 x 30 mL de CH₂Cl₂.

### Exemple 2 - synthèse du bis(chlorosulfonyl)imidure de potassium

Dans un ballon de 250 mL, on ajoute 15,3 g du trisel. On ajoute ensuite goutte à goutte 60 mL de chlorure d'oxalyle puis 1 mL de diméthylformamide. Le milieu réactionnel est agité pendant 3 heures à reflux et la solution devient de couleur jaune. En fin de réaction, la solution est filtrée et on obtient alors un solide blanc (m = 19,0 g) contenant le composé chloré et du chlorure de potassium.

### Exemple 3 - synthèse du bis(fluorosulfonyl)imide

Dans un autoclave de 800 mL, on ajoute 19,0 g du mélange de bis(chlorosulfonyl)imidure de potassium et de chlorure de potassium. On ajoute ensuite 20 g de fluorure d'hydrogène à température ambiante. Le milieu réactionnel est agité pendant 3 heures. L'excès de fluorure d'hydrogène et le chlorure d'hydrogène dégagé sont ensuite éliminés par flux d'air. On obtient alors un solide de couleur jaune or.

## Revendications

1. Procédé de préparation d'un sel de bis(sulfonate)imidure de formule :
(III) (SO₃⁻)-N⁻-(SO₃⁻),3C⁺
où C⁺ représente un cation monovalent, comprenant la réaction de l'acide amidosulfurique de formule :
(I) (OH)-SO₂-NH₂
avec un acide halogénosulfonique de formule :
(II) (OH)-SO₂-X
où X représente un atome d'halogène, et comprenant une réaction avec une base qui est un sel formé avec le cation C⁺.

2. Procédé selon la revendication 1, dans lequel X représente un atome de chlore.

3. Procédé selon la revendication 1 ou 2, dans lequel C⁺ représente l'ion potassium K⁺, sodium Na+, lithium Li⁺ ou césium Cs⁺, de préférence l'ion potassium K⁺.

4. Procédé selon l'une des revendications 1 à 3, comprenant la réaction de l'acide amidosulfurique de formule (I) avec l'acide halogénosulfonique de formule (II), en présence d'une base non nucléophile comprenant le cation C⁺, ladite base non nucléophile étant de préférence le carbonate de potassium K₂CO₃.

5. Procédé selon l'une des revendications 1 à 3, comprenant la réaction de l'acide amidosulfurique de formule (I) avec l'acide halogénosulfonique de formule (II), en présence d'une première base pour fournir le bis(sulfonyl)imide de formule :
(IV) (OH)-SO₂-NH-SO₂-(OH)
puis la réaction du bis(sulfonyl)imide de formule (IV) avec une deuxième base qui est un sel formé avec le cation C⁺, pour obtenir le sel de bis(sulfonate)imidure de formule (III).

6. Procédé selon la revendication 5, dans lequel la première base est la triéthylamine, et la deuxième base est choisie parmi l'hydroxyde de potassium, l'hydroxyde de sodium et le carbonate de potassium

7. Procédé selon l'une des revendications 1 à 6, comprenant une étape de purification du sel de bis(sulfonate)imidure de formule (III), de préférence par recristallisation dans l'eau ou dans un solvant polaire tel qu'un alcool.

8. Procédé de préparation d'acide bis(fluorosulfonyl)imide de formule :
(V) F-(SO₂)-NH-(SO₂)-F
comprenant la préparation d'un sel de bis(sulfonate)imidure de formule (III) selon l'une des revendications 1 à 7, suivie de la fluoration dudit sel de bis(sulfonate)imidure.

9. Procédé selon la revendication 8, dans lequel la fluoration du sel de bis(sulfonate)imidure comprend la réaction du sel de bis(sulfonate)imidure avec un agent fluorant, de préférence choisi parmi le fluorure d'hydrogène, le trifluorure de soufre diéthylamine et le tétrafluorure de soufre.

10. Procédé selon la revendication 8, dans lequel la fluoration du sel de bis(sulfonate)imidure comprend : (a) la chloration du sel de bis(sulfonate)imidure au moyen d'un agent chlorant, de préférence choisi parmi le chlorure de thionyle, le pentachlorure de phosphore, l'oxychlorure de phosphore et le chlorure d'oxalyle, pour obtenir un sel de bis(chlorosulfonyl)imidure de formule :
(VI) Cl-(SO₂)-N⁻-(SO₂)-Cl,C⁺
puis (b) la fluoration du sel de bis(chlorosulfonyl)imidure de formule (VI) au moyen d'un agent fluorant pour obtenir l'acide bis(fluorosulfonyl)imide de formule (V), l'agent fluorant étant de préférence choisi parmi le fluorure d'hydrogène, le trifluorure de soufre diéthylamine, le tétrafluorure de soufre et les sels fluorés, notamment le fluorure de zinc.

11. Procédé de préparation de sel de bis(fluorosulfonyl)imidure de formule :
(VII) F-(SO₂)-N⁻-(SO₂)-F,M⁺
(M pouvant être Li ou Na) comprenant la préparation d'acide bis(fluorosulfonyl)imide de formule (V) selon l'une des revendications 8 à 10, puis la réaction de cet acide bis(fluorosulfonyl)imide avec une base lithiée.

12. Procédé selon la revendication 11, dans lequel la base lithiée ou sodée est choisie parmi l'hydroxyde de lithium ou le carbonate de lithium ou de sodium.

13. Procédé de fabrication d'un électrolyte, comprenant la préparation de sel de bis(fluorosulfonyl)imidure de lithium ou de sodium de formule (VII) selon la revendication 11 ou 12, et la dissolution du sel de bis(fluorosulfonyl)imidure de lithium ou sodium dans un solvant.

14. Procédé de fabrication d'une batterie ou d'une cellule de batterie, comprenant la fabrication d'un électrolyte selon la revendication 13 et l'insertion de cet électrolyte entre une anode et une cathode.

## Patentansprüche

1. Verfahren zur Herstellung eines Bis(sulfonato)-imid-Salzes der Formel:
(III) (SO₃⁻)-N⁻-(SO₃⁻),3C⁺
wobei C⁺ für ein einwertiges Kation steht, umfassend die Umsetzung von Amidoschwefelsäure der Formel:
(I) (OH)-SO₂-NH₂
mit einer Halogensulfonsäure der Formel:
(II) (OH)-SO₂-X
wobei X für ein Halogenatom steht, und umfassend eine Umsetzung mit einer Base, bei der es sich um ein mit dem Kation C⁺ gebildetes Salz handelt.

2. Verfahren nach Anspruch 1, wobei X für ein Chloratom steht.

3. Verfahren nach Anspruch 1 oder 2, wobei C⁺ für das Kaliumion K⁺, das Natriumion Na⁺, das Lithiumion Li⁺ oder das Caesiumion Cs⁺, vorzugsweise das Kaliumion K⁺, steht.

4. Verfahren nach einem der Ansprüche 1 bis 3, umfassend die Umsetzung von Amidoschwefelsäure der Formel (I) mit der Halogensulfonsäure der Formel (II) in Gegenwart einer nichtnukleophilen Base, die das Kation C⁺ umfasst, wobei es sich bei der nichtnukleophilen Base vorzugsweise um Kaliumcarbonat K₂CO₃ handelt.

5. Verfahren nach einem der Ansprüche 1 bis 3, umfassend die Umsetzung von Amidoschwefelsäure der Formel (I) mit der Halogensulfonsäure der Formel (II) in Gegenwart einer ersten Base zur Bereitstellung des Bis(sulfonyl)imids der Formel:
(IV) (OH)-SO₂-NH-SO₂-(OH)
und dann die Umsetzung des Bis(sulfonyl)imids der Formel (IV) mit einer zweiten Base, bei der es sich um ein mit dem Kation C⁺ gebildetes Salz handelt, zum Erhalt des Bis(sulfonato)imid-Salzes der Formel (III).

6. Verfahren nach Anspruch 5, wobei es sich bei der ersten Base um Triethylamin handelt und die zweite Base aus Kaliumhydroxid, Natriumhydroxid und Kaliumcarbonat ausgewählt wird.

7. Verfahren nach einem der Ansprüche 1 bis 6, umfassend einen Schritt der Reinigung des Bis(sulfonato)imid-Salzes der Formel (III), vorzugsweise durch Umkristallisation aus Wasser oder einem polaren Lösungsmittel wie einem Alkohol.

8. Verfahren zur Herstellung von Bis(fluorsulfonyl)-imidsäure der Formel:
(V) F-(SO₂)-NH-(SO₂)-F
umfassend die Herstellung eines Bis(sulfonato)-imid-Salzes der Formel (III) nach einem der Ansprüche 1 bis 7 mit anschließender Fluorierung des Bis(sulfonato)imid-Salzes.

9. Verfahren nach Anspruch 8, bei dem die Fluorierung des Bis(sulfonato)imid-Salzes die Umsetzung des Bis(sulfonato)imid-Salzes mit einem Fluorierungsmittel, das vorzugsweise aus Fluorwasserstoff, Diethylaminoschwefeltrifluorid und Schwefeltetrafluorid ausgewählt wird, umfasst.

10. Verfahren nach Anspruch 8, bei dem die Fluorierung des Bis(sulfonato)imid-Salzes Folgendes umfasst:
(a) die Chlorierung des Bis(sulfonato)imid-Salzes mit einem Chlorierungsmittel, das vorzugsweise aus Thionylchlorid, Phosphorpentachlorid, Phosphoroxidchlorid und Oxalylchlorid ausgewählt wird, zum Erhalt eines Bis(chlorsulfonyl)imid-Salzes der Formel:
(VI) Cl-(SO₂)-N⁻-(SO₂)-Cl,C⁺
und dann (b) die Fluorierung des Bis(chlorsulfonyl)imid-Salzes der Formel (VI) mit einem Fluorierungsmittel zum Erhalt der Bis(fluorsulfonyl)imidsäure der Formel (V), wobei das Fluorierungsmittel vorzugsweise aus Fluorwasserstoff, Diethylaminoschwefeltrifluorid, Schwefeltetrafluorid und Fluoridsalzen, insbesondere Zinkfluorid, ausgewählt wird.

11. Verfahren zur Herstellung eines Bis(fluorsulfonyl)imid-Salzes der Formel:
(VII) F-(SO₂)-N⁻-(SO₂)-F,M⁺
(wobei M für Li oder Na stehen kann), umfassend die Herstellung von Bis(fluorsulfonyl)imidsäure der Formel (V) nach einem der Ansprüche 8 bis 10 mit anschließender Umsetzung dieser Bis(fluorsulfonyl)imidsäure mit einer Lithiumbase.

12. Verfahren nach Anspruch 11, bei dem die Lithium- oder Natriumbase aus Lithiumhydroxid, Lithiumcarbonat oder Natriumcarbonat ausgewählt wird.

13. Verfahren zur Herstellung eines Elektrolyts, umfassend die Herstellung des Lithium- oder Natriumbis(fluorsulfonyl)imid-Salzes der Formel (VII) nach Anspruch 11 oder 12 und das Lösen des Lithium- oder Natriumbis(fluorsulfonyl)imid-Salzes in einem Lösungsmittel.

14. Verfahren zur Herstellung einer Batterie oder einer Batteriezelle, umfassend die Herstellung eines Elektrolyts nach Anspruch 13 und das Einbringen dieses Elektrolyts zwischen einer Anode und einer Kathode.

## Claims

1. Process for the preparation of a bis(sulfonato)imide salt of formula:
(III) (SO₃⁻)-N⁻-(SO₃⁻)3C⁺
where C⁺ represents a monovalent cation, comprising the reaction of amidosulfuric acid of formula:
(I) (OH)-SO₂-NH₂
with a halosulfonic acid of formula:
(II) (OH)-SO₂-X
where X represents a halogen atom, and comprising a reaction with a base which is a salt formed with the cation C⁺.

2. Process according to Claim 1, in which X represents a chlorine atom.

3. Process according to Claim 1 or 2, in which C⁺ represents the potassium ion K⁺, the sodium ion Na⁺, the lithium ion Li⁺ or the caesium ion Cs⁺, preferably the potassium ion K⁺.

4. Process according to one of Claims 1 to 3, comprising the reaction of amidosulfuric acid of formula (I) with the halosulfonic acid of formula (II), in the presence of a non-nucleophilic base comprising the C⁺ cation, the said non-nucleophilic base preferably being potassium carbonate K₂CO₃.

5. Process according to one of Claims 1 to 3, comprising the reaction of amidosulfuric acid of formula (I) with the halosulfonic acid of formula (II), in the presence of a first base, to provide the bis(sulfonyl)imide of formula:
(IV) (OH)-SO₂-NH-SO₂-(OH)
and then the reaction of the bis(sulfonyl)imide of formula (IV) with a second base, which is a salt formed with the cation C⁺, in order to obtain the bis(sulfonato)imide salt of formula (III).

6. Process according to Claim 5, in which the first base is triethylamine and the second base is chosen from potassium hydroxide, sodium hydroxide and potassium carbonate.

7. Process according to one of Claims 1 to 6, comprising a stage of purification of the bis(sulfonato)imide salt of formula (III), preferably by recrystallization from water or from a polar solvent, such as an alcohol.

8. Process for the preparation of bis(fluorosulfonyl)imide acid of formula:
(V) F-(SO₂)-NH-(SO₂)-F
comprising the preparation of a bis(sulfonato)imide salt of formula (III) according to one of Claims 1 to 7, followed by the fluorination of the said bis(sulfonato)imide salt.

9. Process according to Claim 8, in which the fluorination of the bis(sulfonato)imide salt comprises the reaction of the bis(sulfonato)imide salt with a fluorinating agent, preferably chosen from hydrogen fluoride, diethylaminosulfur trifluoride and sulfur tetrafluoride.

10. Process according to Claim 8, in which the fluorination of the bis(sulfonato)imide salt comprises:
(a) the chlorination of the bis(sulfonato)imide salt by means of a chlorinating agent, preferably chosen from thionyl chloride, phosphorus pentachloride, phosphorus oxychloride and oxalyl chloride, in order to obtain a bis(chlorosulfonyl)imide salt of formula:
(VI) Cl-(SO₂)-N⁻-(SO₂)-Cl C⁺
and then (b) the fluorination of the bis(chlorosulfonyl)imide salt of formula (VI) by means of a fluorinating agent, in order to obtain the bis(fluorosulfonyl)imide acid of formula (V), the fluorinating agent preferably being chosen from hydrogen fluoride, diethylaminosulfur trifluoride, sulfur tetrafluoride and fluoride salts, in particular zinc fluoride.

11. Process for the preparation of bis(fluorosulfonyl)imide salt of formula:
(VII) F-(SO₂)-N⁻-(SO₂)-F M⁺
(it being possible for M to be Li or Na) comprising the preparation of bis(fluorosulfonyl)imide acid of formula (V) according to one of Claims 8 to 10 and then the reaction of this bis(fluorosulfonyl)imide acid with a lithium base.

12. Process according to Claim 11, in which the lithium or sodium base is chosen from lithium hydroxide, lithium carbonate or sodium carbonate.

13. Process for the manufacture of an electrolyte, comprising the preparation of lithium or sodium bis(fluorosulfonyl)imide salt of formula (VII) according to Claim 11 or 12 and the dissolution of the lithium or sodium bis(fluorosulfonyl)imide salt in a solvent.

14. Process for the manufacture of a battery or of a battery cell, comprising the manufacture of an electrolyte according to Claim 13 and the insertion of this electrolyte between an anode and a cathode.
